# EUROPEAN PATENT SPECIFICATION

(11) **EP 3 522 059 B1**
(45) Date of publication and mention of the grant of the patent: **27.10.2021**
(21) Application number: 19150880.3
(22) Date of filing: 09.01.2019
(51) Int. Cl.: G06F 21/57, G06F 9/445, G06F 8/654

(54) **PERFORM SECURITY ACTION BASED ON INVENTORY COMPARISON**
DURCHFÜHRUNG VON SICHERHEITSMASSNAHMEN BASIEREND AUF EINEM BESTANDSVERGLEICH
RÉALISATION D'ACTION DE SÉCURITÉ SUR LA BASE D'UNE COMPARAISON D'INVENTAIRE

(30) Priority: 31.01.2018 US 201815884747
(43) Date of publication of application: 07.08.2019
(73) Proprietor: Hewlett Packard Enterprise Development LP, Houston, TX 77070 (US)
(72) Inventor: Depew, Kevin G., HOUSTON, TX Texas 77070 (US); Haskell, Darrell R., HOUSTON, TX Texas 77070 (US); Harsany, John S., HOUSTON, TX Texas 77070 (US)
(74) Representative: Iqbal, Md Mash-Hud

(56) References cited:
- WO-A1-2015/183820
- US-A1- 2010 153 696
- US-A1- 2014 250 291
- US-A1- 2018 089 189

## Description

### BACKGROUND

Service providers and manufacturers are challenged to deliver quality and value to consumers, for example by providing access to computing capabilities. A data center is a facility used to house computer networks, computer systems, and associated components, such as telecommunications and storage systems. Datacenters, offices, etc. can be end locations for computing devices manufactured by a manufacturer. Computing devices may be attacked at its endpoint, e.g., a datacenter, or in transit.

US2010153696 relates to evaluating endpoint computing assets. The endpoint has both a traditional operating system for applications, and the like, and another operating system during a pre-boot phase of operation. During use, the traditional operating system identifies a last evaluation status of the computing device at a time just prior to shutting down. Upon a next booting, the pre-boot operating system loads and examines the last evaluation status. If the last evaluation status requires any completion action in order to comply with a predetermined computing policy, either or both the operating systems attend to its effectuation, including communication/handoff by way of one or more security agents.

US2014250291 is directed to continuation of trust for platform boot firmware. A device may comprise a processing module and a memory module including read-only memory (ROM) on which is stored platform boot firmware. On activation, the processing module may load the platform boot firmware. The platform boot firmware may cause the processing module to first load a trusted pre-verifier file to load and verify the signature of a hash table loaded from the platform boot firmware. The processing module may then load firmware program files from the platform boot firmware, calculate a hash for each file, and verify whether each program hash is in the hash table. Firmware program files with hashes in the hash table may be allowed to execute. If any firmware program file hash is not in the hash table, the processing module may perform platform specific security actions to prevent the device from being compromised.

WO2015183820 discloses systems and for dynamic authorization. A signal may be received from a sensor. A concept may be determined from the signal. The concept may be a location of a computing device, an action being performed with the computing device, an identity of a user of the computing device, or a temporal context for the computing device. A current pattern may be determined from the concept. The current pattern may be matched to a stored pattern. The stored pattern may be associated with a security outcome. The security outcome may be sent to be implemented.

### BRIEF DESCRIPTION OF THE DRAWINGS

The following detailed description references the drawings, wherein:
FIGs. 1 and 2 are block diagrams of computing devices comparing a startup inventory to a stored inventory to perform a security action, according to various examples;
FIG. 3 is a flowchart of a method for performing a security action based on an inventory comparison, according to an example; and
FIG. 4 is a block diagram of a device capable of executing a method to perform a security action based on an inventory comparison, according to an example.

### DETAILED DESCRIPTION

Service providers and manufacturers are challenged to deliver quality and value to consumers, for example by providing access to computing capabilities. A data center is a facility used to house computer networks, computer systems, and associated components, such as telecommunications and storage systems. Datacenters, offices, warehouses, etc. can be end locations for computing devices provided by a manufacturer. Computing devices may be attacked at its endpoint, e.g., a datacenter, or in transit.

One issue for a customer concerned about security is how the customer can determine with confidence that a computer system shipped from a manufacturer was not attacked or modified in the supply chain in transit from the computer manufacturer to the end customer. The transit of a computer system from the manufacturer to the end customer is an opportunity for malicious attacks on the system that can be exploited at a later time. Example exploits can include swapping out or adding hardware (e.g., special memory devices such as dual in-line memory modules with malicious components, Input/Output (I/O) cards such as Peripheral Component Interconnect Express (PCIe) cards) that can capture and compromise customer data or modify configuration settings or firmware revisions to reduce the security protections of the system.

Another challenge is protecting systems from attack when a customer ships a system from one site to another or when a system is at a non-secure endpoint site. If the system is being shipped from one site to another or if it is not in a secure area, its configuration settings or hardware configuration could potentially be modified leaving the system in a less secure state.

Accordingly, approaches described herein allows for unauthorized changes to hardware components, theft of hardware components, and modification of hardware components and/or firmware configurations to be detected.

In one example, an entity (e.g., an automatic process during the manufacturing process or user putting the system into a mode (e.g., a secure transit mode, a secure rest mode, etc.)) in which a digital inventory of the computer system is created by a firmware component (e.g., a Basic Input Output System (BIOS), a Baseboard Management Controller (BMC), other firmware components, etc.) and securely stored. In this example, the digital inventory is then checked on each system boot and the BIOS will indicate if the inventory has changed. A change in the inventory indicates that the system has been modified in some way.

In one example, when a customer who has selected a secure transit solution as part of a configure-to-order process receives the system or when a user who has enabled this mode themselves powers on or reboots the system, a notification can be provided to notify the user that the system is in this mode of operation and the system will report at power on whether it has been compromised or not based on whether the digital inventory calculated on that boot matches the digital inventory which is securely stored.

If the system fails the digital signature check, there can be a customer configurable security action. In one example, the security action can include not being able to power on the system to an operating system (OS) without a password. In one example, the password for this feature can be implemented by the system when the mode is enabled. A form of authentication (e.g., the password) can be beneficial because without a protection, a malicious party may take a system out of secure transit/rest mode, compromise the system, and then put the system back into secure transit/rest mode using a new inventory.

The digital inventory can take multiple forms. In the one example, the digital inventory can include creating a hash (e.g., using a modern, industry standard hashing algorithm) which includes a number of items to be protected. In one example, the items can include all industry standard PCIe configuration space for all PCIe devices installed in the system. In another example, the items can include unique identifier information (e.g., serial numbers) from installed dual inline memory modules (DIMMs). In a further example, the items can include a unique identifier available in a processor. In some examples, this value is not modifiable and is unique to each individual processor. In a further example, the items can include configuration settings for firmware. This can include, for example, security settings and a Secure Boot Key database. In some examples all configuration settings can be inventoried. In other examples, a subset of the configuration settings (e.g., settings associated with security, updates, hardware components, etc.) can be inventoried. Further, firmware revisions for installed firmware (e.g., BIOS, BMC firmware, power supply firmware, controller hub firmware, custom Application Specific Integrated Circuit (ASIC) versions, etc.) on the system board or elsewhere on the computing system can be inventoried.

In some examples, the digital inventory use hardware training data (e.g., DIMM training information and PCIe card training information). Training data can be taken at time of manufacture and can be reused for this purpose. In some examples, characteristics of each of the hardware modules can be taken at multiple parameters (e.g., temperature, speed, capacitance, etc.) to create a trend parameter. In some examples, machine learning can be used to learn characteristics for various types of components. The characteristics of the module at various parameters can be inferred based on how previously tested components perform at different parameter settings. In some examples, the training data can be unique to each module. In other examples, the training data maps to a trend characteristic group and whether or not the module is within the trend characteristic group identifier is used as an identifier (though not completely unique).

In one example, during manufacturing time, the system is put into a Secure Transit mode. The system is put into this mode when a password is provided. This password can be provided by a customer as part of the ordering process, be randomly determined during the manufacturing process and provided to the customer, etc. In one example, to make changes to the configuration of the system, the password is required. On the next boot after the system is put into the Secure Transit Mode, the firmware (e.g., a BIOS) will create a digital inventory by creating a hash of installed hardware devices (DIMM unique identifiers, PCIe card unique identifiers within the PCI configuration space, processor unique identifiers, etc.), configuration settings, firmware revisions, etc. This digital inventory can be stored in secure non-volatile storage.

In the example, on any subsequent boot, the firmware will generate the current digital startup inventory and compare the calculated digital inventory with the stored "golden" digital inventory. If the inventories match, the firmware will indicate that the system is in the Secure Transit Mode (or other mode using this approach) and that the system has not been compromised. If the inventories do not match, the firmware can provide a notification (e.g., on screen or via a log message) that system is in the mode and that the system has been compromised or modified.

Other security actions can be configured. In one example, the security action can include to prevent boot unless the password is provided. In one example, the customer receiving the system can confirm that the system comes to them displaying the appropriate messages and has not been compromised (confirming that the digital signatures match). In further examples, the password can be required to disable the mode, reconfigure the mode to another mode, or change security action settings (e.g., what security action takes place for particular events that are detected).

In another example, the approaches described can also be used to allow an entity to ship a system from one site to another with the same protections. This can allow an entity to ship a system from a central site to remote locations and verify that no compromises occurred in the entity's own "supply chain." Also, similar approaches can be used for systems "at rest" which have been deployed in a non-secure location or even a secure location. The system can be left in Secure Transit or Rest Mode at all times to prevent malicious modification to the system. In some of these examples, parts of the inventories may not be taken, for example, firmware revision inventories. This would allow updating the firmware as needed on such a system without taking it out of the secure mode while still protecting against hardware changes or configuration setting changes.

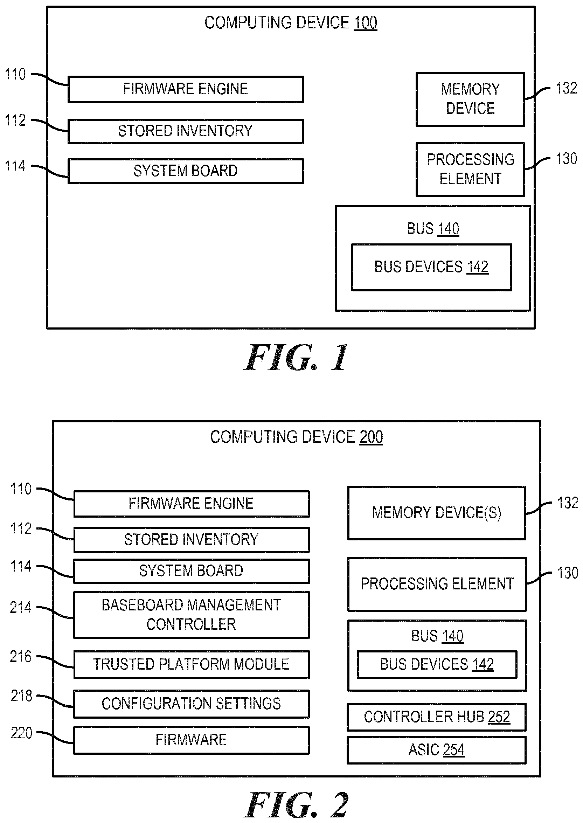

FIGs. 1 and 2 are block diagrams of computing devices comparing a startup inventory to a stored inventory to perform a security action, according to various examples. Computing device 100 includes a firmware engine 110, a stored inventory 112, a system board 114, a processing element 130, a memory device 132, a bus 140, and associated bus devices 142. Computing device 200 also includes a baseboard management controller (BMC) 214, a trusted platform module (TPM) 216, configuration settings 218, firmware 220, a controller hub 252, and an ASIC 254.

In some examples, the computing devices 100, 200 can also include Input/Output interfaces, which may be used to communicate with other devices, for example, via a network, provide audible information, provide visual information, etc. The input/output interfaces may also be used to implement other input/output, for example, storage functionality (e.g., access to one or multiple storage arrays).

Firmware engine 110 can be implemented using instructions executable by a processor and/or logic. In some examples, the firmware engine can be implemented as platform firmware. Platform firmware may include an interface such as a basic input/output system (BIOS) or unified extensible firmware interface (UEFI) to allow it to be interfaced with. The platform firmware can be located at an address space where the processing element 130 (e.g., CPU) for the computing device 100, 200 boots. In some examples, the platform firmware may be responsible for a power on self-test for the computing device 100, 200. In other examples, the platform firmware can be responsible for the boot process and what, if any, operating system to load onto the computing device 100, 200. Further, the platform firmware may be capable to initialize various components of the computing device 100, 200 such as peripherals, memory devices 132, memory controller settings, storage controller settings, bus speeds, video card information, etc.

In some examples, the BMC 214 can be used to implement services for the computing device 200. BMC 214 can be implemented using a separate processor from the processing element 130 that is used to execute a high level operating system. BMCs can provide so-called "lights-out" functionality for computing devices. The lights out functionality may allow a user, such as a systems administrator, to perform management operations on the computing device 200 even if an operating system is not installed or not functional on the computing device. Moreover, in one example, the BMC 214 can run on auxiliary power, thus the computing device 200 need not be powered on to an on state where control of the computing device 200 is handed over to an operating system after boot. As examples, the BMC 214 may provide so-called "out-of-band" services, such as remote console access, remote reboot and power management functionality, monitoring health of the system, access to system logs, and the like. As used herein, a BMC 214 has management capabilities for sub-systems of a computing device 200, and is separate from a processor or processing element 130 that executes a main operating system of a computing device (e.g., a server or set of servers).

As noted, in some instances, the BMC 214 may enable lights-out management of the computing device 200, which provides remote management access (e.g., system console access) regardless of whether the computing device 200 is powered on, whether a primary network subsystem hardware is functioning, or whether an OS is operating or even installed. The BMC 214 may comprise an interface, such as a network interface, and/or serial interface that an administrator can use to remotely communicate with the BMC 214. As used herein, an "out-of-band" service is a service provided by the BMC 214 via a dedicated management channel (e.g., the network interface or serial interface) and is available whether the computing device 200 is in powered on state.

In some examples, a BMC 214 may be included as part of an enclosure. In other examples, a BMC 214 may be included in one or more of the servers (e.g., as part of the management subsystem of the server) or connected via an interface (e.g., a peripheral interface). In some examples, sensors associated with the BMC 214 can measure internal physical variables such as humidity, temperature, power supply voltage, communications parameters, fan speeds, operating system functions, or the like. The BMC 214 may also be capable to reboot or power cycle the device. As noted, the BMC 214 allows for remote management of the device, as such, notifications can be made to a centralized station using the BMC 214 and passwords or other user entry can be implemented via the BMC 214.

The Operating System is a system software that manages computer hardware and software resources and provides common services for computer programs. The OS can be executable on processing element 130 and loaded to memory devices 132. The OS is a high level OS such as LINUX, WINDOWS, UNIX, a bare metal hypervisor, or other similar high level software that a boot firmware engine 110 of the computing device 200 turns control of the computing device 200 to.

In one example, an entity initiates putting the computing device 100, 200 into a first mode (e.g., an automatic process during the manufacturing process or user putting the system into a first mode (e.g., a secure transit mode, a secure rest mode, etc.)) in which an inventory of the computer system is taken by the firmware engine 110. As noted, in some examples, the firmware engine 110 can be implemented as platform firmware and may be implemented in conjunction with other firmware components (e.g., the BMC 214, or other microcontrollers). In the example, a password may be input as part of the implementation of the first mode. In one example, the firmware engine 110 can take an inventory and store the inventory as the stored inventory 112 when the computing device 100, 200 is put into the first mode.

In this example, the firmware engine 110 can take an inventory of multiple components that may be desirous to be protected and tracked. In some examples, the firmware engine 110 can wait until the next reboot of the computing device 100, 200 to perform the inventory. In other examples, the reboot is not needed. In some examples, the initiation of the mode is at boot of an operating system, where the reboot may be beneficial. For example, the computing device 100, 200 can boot to an operating system and a driver can be used in the operating system to configure the mode on next reboot of the computing device. In some examples, the password can be entered at the operating system level. In some examples, an application running on the operating system can be used to initiate the mode. Further, in some examples, the BMC 214 may be used to control the system during boot into the operating system. Further, in some examples, a script may be used to enable the first mode remotely and enter the password. The password can be stored or be implemented to be necessary to turn the mode off.

Examples of devices or components to be inventoried include one or multiple processing elements 130, memory devices 132, the system board 114 and/or multiple components of the system board 114, bus devices 142 on one or multiple bus 140 (e.g., a PCIe bus), a controller hub 252 and/or devices connected to the controller hub 252, field replaceable unit enclosures, a northbridge device, other ASICs 254, etc. As used herein, the system board is the main printed circuit board used for the computing device 100, 200 and allows communication between many of the components of the computing device, for example, the processing element 130, the memory device 132, peripherals, bus devices, etc. In some examples, a controller hub 252 can be an I/O controller hub, for example a southbridge. The controller hub may be used to manage data communications between a CPU and other components of the system board 114. In some examples, a controller hub may have direct media interface to a northbridge device or the CPU. Further the controller hub may provide peripheral support for the computing device 200, such as bus connections like Universal Serial Bus (USB), Peripheral Component Interconnect (PCI), PCI express, PCI extended, serial AT attachment, audio circuitry, integrated Ethernet, enhanced host controller interfaces, combinations thereof, etc. Other examples of identifiers that can be used include system board revision identifiers, complex programmable logic device revision identifiers, ASIC stepping identifiers, platform and chassis identifiers, riser identifiers, embedded controller identifiers, battery and power identifiers, storage component identifiers, etc.

In one example, the firmware engine 110 can interrogate (e.g., send a query and receive a response) to and from each of the components to be inventoried. This may be performed by a particular sequence to ensure that each component is detected and inventoried. In some examples, an indirect approach can be used, for example, one or more bus 140 on the computing device 100, 200 can be searched for components and then the components can be inventoried. As used herein, a bus is a communication system that transfers data between components inside the computing device 100, 200. Buses can include a PCIe bus, a memory bus, a universal serial bus, etc.

In some examples, a bus device 142 can be included in a bus as a bus device 142. As used herein, a peripheral device is a component that is not part of the essential computer (e.g., a main memory or central processing unit). An example of a peripheral device on a bus is a PCIe integrated network card or a PCIe graphics accelerator. In some examples, the firmware engine 110 is not directly connected to the component and another component (e.g., the controller hub 252) and/or one or more bus can act as an intermediary between the firmware engine 110 and the components. In some examples, the inventory can include one or more unique identifiers of the respective components. In other examples, the inventory can include other static information about the component.

As used herein a memory device 132 is a component that can store information. The memory device 132 can be volatile or non-volatile. Further, the memory device 132 may be addressable by a central processing unit of the computing device 100, 200. An example of a memory device 132 includes a DIMM.

In some examples, the inventory can also include one or multiple configuration settings 218 of firmware from the firmware engine 110, other components of the system board 114, the BMC 214, field replaceable units (FRUs), etc. In some examples, the configuration information can include values for security settings, hardware enabled, hardware speed settings, voltage settings, etc. In other examples, the configuration information inventoried can include a subset of configuration settings 218 that would normally not change between boots or with usage. In some examples, the inventory may also include at least one firmware version identifier for one or multiple firmware on the computing device 200. A firmware version identifier can be an identifier of a version of the firmware being implemented on a particular component. Moreover, in some examples, hardware training information and characteristics can be stored as part of the inventory.

The inventory taken at the time the mode is initiated can be stored in the stored inventory 112. In some examples, the stored inventory 112 is a non-volatile memory. In some examples, the stored inventory 112 is in a location that is only modifiable by the firmware engine 110 (e.g., a non-volatile location that cannot be modified outside of the firmware engine 110). In a further example, cryptographic information (e.g., a signature created using a cryptographic algorithm using the stored inventory) is also taken and stored in a secure location to ensure that the stored inventory 112 is not modified. In one example, the secure location is in a Trusted Platform Module 216. In another example, the secure location is in a part of the BMC 214. In some examples, the secure location is a location that is only accessible via the firmware engine 110. As used herein, cryptographic information is information that can be used to determine whether the stored inventory at the time of initiation of the mode has been changed. In some examples, the password can also be saved to a non-volatile memory, for example, a secure location, as part of the implementation of the initiation of the mode. In other examples, the password is not stored.

In some examples, the stored inventory 112 is in the form of a hash. The hash can be implemented using a hash function, such as a cryptographic hash function (e.g., MD5, SHA, etc.) or other hash function. As used herein, hash can refer to each information of the components being separately hashed or for the whole inventory to be determined and then a single hash being taken for the whole inventory. In some examples, the stored inventory 112 can be stored in plain text. Separate hashes allows for determining what changed to be simplified. In some examples, a key can be used in conjunction with the hash. As noted, in some examples, the stored inventory 112 is in the form of a hash including a number of unique identifiers of the components found when the computing device 100, 200 was put into the mode. In other examples, other information inventoried as described herein can be hashed as well.

After the initialization of the mode is complete, on subsequent boots, the firmware engine 110 can execute firmware 220 to execute a boot process. In one example, during boot, the processing element 130 starts by fetching instructions at an address mapped to a location of the firmware 220 being executed. During the boot process, the firmware engine 110 takes a startup inventory of the computing device 200 including a plurality of startup components. The startup inventory includes information about at least one processing element 130, at least one memory device 132, the system board 114, and at least one bus device 142 on the bus 140. A same process for taking the inventory at time of initialization of the mode can be used for taking the startup inventory. As such, the startup inventory can be in the form of a startup hash including a number of unique identifiers of the startup components. As noted, additional information can also be included in the startup inventory. As used herein, the term "startup" identifies that the inventory or device being referenced is inventoried at the time of the current boot. These components and inventory information can be the same as the inventory information and components at the time of the originally stored inventory 112.

The firmware engine 110 can compare the startup inventory to the stored inventory 112 taken when the computing device 100, 200 was put into the mode. The comparison can determine whether the startup inventory and the stored inventory 112 match. A security action is performed in response to the comparison. For example, if the startup inventory and stored inventory 112 do not match, a notification can be provided. The notification can include information that a modification has been detected. Further, the notification can be visual (e.g., an output to a display) or as a log alert sent to an administrator. In some examples, the firmware engine 110 does not allow booting to a higher level operating system without the password that was used during initialization of the mode. As such, the password can be requested. The password can then be used to unlock the computing device 100, 200 and allow boot to the operating system.

In one example, the BMC 214 may be associated with a secure storage, a hardware root of trust, or other security features. In one example, on initial boot of the computing device 200 into a service operating system (OS) or provisioning engine in a factory, a unique private and public key are generated and 'glued' onto the system by being saved into the BMC storage. This storage can be persistent and not replaceable. The BMC 214 may allow access to a key using an application programming interface. The values can be written to a write once register on a same Application Specific Integrated Circuit (ASIC) as the BMC. The write once register can be implemented, for example, using fuses. In one example, the private key is created by executing an algorithm using random sources and is programmed. In another example, the public key is a cryptographic hash of the private key. In some examples, once programmed, the ability to change the registers is disabled (e.g., severing a fuseable link, for example, on a write line). In some examples, the BMC 214 can be used to ensure that firmware of the computing device 200 is secure (e.g., by ensuring that firmware is not updated unless it is signed or encrypted using a public key that the private key of the BMC 214 can decrypt. Further, in some examples, the BMC 214 can stop the computing device 200 from booting with compromised firmware.

Processing element 130 may be one or multiple central processing unit (CPU) or a combination of a CPU and other components such as a graphics processing unit (GPU), or microprocessor suitable for retrieval and execution of instructions and/or electronic circuits configured to perform the functionality described herein. In some examples, the firmware engine 110 may be implemented as a series of instructions encoded on a machine-readable storage medium of computing device 100, 200 and executable by processing element 130.

In some examples, a silicon root-of-trust feature supported by the computing device is used to ensure that the firmware on the computing device 100, 200 is not compromised. The silicon root-of-trust ensures that the BIOS and BMC Firmware cannot be replaced with non-authentic BIOS and BMC Firmware even with physical access to the system.

A communication network can use wired communications, wireless communications, or combinations thereof. Further, the communication network can include multiple sub communication networks such as data networks, wireless networks, telephony networks, etc. Such networks can include, for example, a public data network such as the Internet, local area networks (LANs), wide area networks (WANs), metropolitan area networks (MANs), cable networks, fiber optic networks, combinations thereof, or the like. In certain examples, wireless networks may include cellular networks, satellite communications, wireless LANs, etc. Further, the communication network can be in the form of a direct network link between devices. Various communications structures and infrastructure can be utilized to implement the communication network(s). Computing devices can connect to other devices using the communication network.

By way of example, devices communicate with each other and other components with access to the communication network via a communication protocol or multiple protocols. A protocol can be a set of rules that defines how nodes of the communication network interact with other nodes. Further, communications between network nodes can be implemented by exchanging discrete packets of data or sending messages. Packets can include header information associated with a protocol (e.g., information on the location of the network node(s) to contact) as well as payload information.

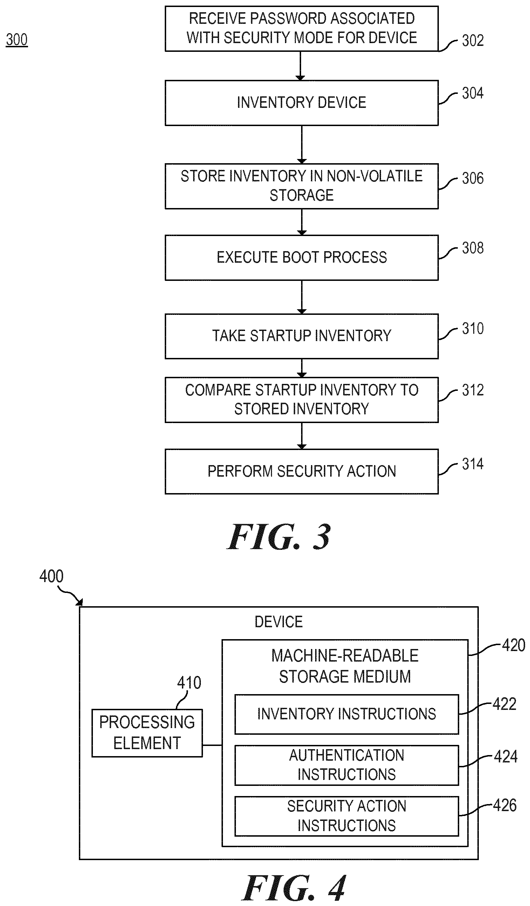

FIG. 3 is a flowchart of a method for performing a security action based on an inventory comparison, according to an example. FIG. 4 is a block diagram of a device capable of executing a method to perform a security action based on an inventory comparison, according to an example.

The device 400 includes, for example, a processing element 410, and a machine-readable storage medium 420 including instructions 422, 424, 426 for performing a security action based on a comparison of inventories. Device 400 may be, for example, a server, a notebook computer, a manufacturing device, or any other computing device capable of performing the features described herein.

In certain examples, processing element 410 may include, one or multiple central processing unit (CPU), one or multiple semiconductor-based microprocessor, one or multiple graphics processing unit (GPU), other hardware devices suitable for retrieval and execution of instructions stored in machine-readable storage medium 420, or combinations thereof. The processing element 410 can be a physical device. Moreover, in one example, the processing element 410 may include multiple cores on a chip, include multiple cores across multiple chips, multiple cores across multiple devices (e.g., if the device 400 includes multiple node devices), or combinations thereof. Processing element 410 may fetch, decode, and execute instructions 422, 424, 426 to implement method 300. As an alternative or in addition to retrieving and executing instructions, processing element 410 may include at least one integrated circuit (IC), other control logic, other electronic circuits, or combinations thereof that include a number of electronic components for performing the functionality of instructions 422, 424, 426.

Machine-readable storage medium 420 may be any electronic, magnetic, optical, or other physical storage device that contains or stores executable instructions. Thus, machine-readable storage medium may be, for example, Random Access Memory (RAM), an Electrically Erasable Programmable Read-Only Memory (EEPROM), a storage drive, a flash memory, a Compact Disc Read Only Memory (CD-ROM), and the like. As such, the machine-readable storage medium can be non-transitory. As described in detail herein, machine-readable storage medium 420 may be encoded with a series of executable instructions for performing method 300.

Although execution of method 300 is described below with reference to device 400, other suitable components for execution of method 300 can be utilized (e.g., computing device 100, 200). Additionally, the components for executing the method 300 may be spread among multiple physical devices. Method 300 may be implemented in the form of executable instructions stored on a machine-readable storage medium, such as storage medium 420, and/or in the form of electronic circuitry.

The device 400 can be in a mode where it can take input. The input can be used to turn on a mode (e.g., a secure mode, a transit mode, a rest mode, etc.). As part of implementation of the mode, at 302, processing element 410 receives a password associated with a first mode of security for the device. Authentication instructions 424 can be used to accept input of the password. As noted, the password can be selected as part of a manufacturing ordering process or be input by an end user. As noted above, on next boot or without a new boot, the inventory instructions 422 can be executed to implement the mode and take an inventory.

At 304, inventory instructions 422 are executed to inventory the device 400. The inventory can be based on a number of unique identifiers associated with particular components of the device 400. For example, at least one unique identifier can be associated with each main memory module installed on the device, each processor installed on the device, a system board of the device, each of a number of bus devices in a configuration space of a bus of the device, combinations thereof, etc. In some examples, the configuration space is the underlying way that a protocol used to implement the bus performs auto configuration of components (e.g., cards) inserted into the bus. An example of a configuration space is the PCIe configuration space.

Further, as noted above, the inventory can be based on one or multiple configuration settings. Moreover, in some example, version information about each of a number of firmware implemented on the device can be included in the inventory. As noted above, the inventory can be implemented using a form of a hash. At 306, the inventory is stored at the device 400. As noted above, a secure storage can be used and cryptographic information about the inventory can be stored (306).

Once the mode is enabled, on a subsequent boot, the processing element 410 executes a boot process (308). As noted, in some examples, when main power is applied to the device 400, the processing element 410 can begin executing at a boot sector implementing the boot process. During the boot process, because the mode is enabled, inventory instructions 422 are used to take a startup inventory of the device (310). The startup inventory can include looking for the same components sought out in original process to take the stored inventory. Moreover, a hash can also be used to implement the startup.

At 312, inventory instructions 422 are executed by the processing element 410 to compare the startup inventory to the stored inventory to determine whether the startup inventory and stored inventory match.

At 314, a security action can be performed in response to the comparison by executing security action instructions 426. In one example, the inventories match, a notification can be output as described above indicating that the mode is active and/or that the computing device is unaltered. In another example, if the inventories do not match, a custom action can be taken. For example, a notification can be sent to a destination flagging that the device 400 may have been modified. In another example, the security action can include outputting the notification and requiring the password received when the mode was activated before the device can be booted to an operating system.

In some examples, the cryptographic information can indicate that the stored inventory was altered. In this scenario, the password can also be requested by executing authentication instructions 424 to allow the device 400 to boot to an operating system. Moreover, a notification can be sent indicating that the inventory has been changed.

While certain implementations have been shown and described above, various changes in form and details may be made. For example, some features that have been described in relation to one implementation and/or process can be related to other implementations. In other words, processes, features, components, and/or properties described in relation to one implementation can be useful in other implementations. Furthermore, it should be appreciated that the systems and methods described herein can include various combinations and/or sub-combinations of the components and/or features of the different implementations described. Thus, features described with reference to one or more implementations can be combined with other implementations described herein.

## Claims

1. A computing device (100,200) comprising:
at least one processing element (130);
at least one memory device (132);
a bus (140) including at least one bus device (142);
a system board (114);
a firmware engine (110) including firmware (220) to:
receive (302) a password associated with a first mode of security for the computing device;
take (304) an inventory of the computing device, the inventory based on a plurality of unique identifiers respectively associated with each memory device, each processing element, the system board, and each bus device; and
store (306) the inventory in a non-volatile storage as a stored inventory (112);
said firmware to execute a boot process on boot of the computing device subsequent to the computing device being placed in the first mode that, during the boot process, is to:
take (310) a startup inventory of the computing device including a plurality of startup components, wherein the startup inventory is based on a plurality of startup unique identifiers of each processing element, each memory device, the system board, and each of a number of bus devices in a configuration space of the bus,
compare (312) the startup inventory to the stored inventory taken when the computing device was put into the first mode to determine whether the startup inventory and the stored inventory match; and
perform (314) a security action in response to the startup inventory and the stored inventory not matching.

2. The computing device of claim 1, further comprising:
a baseboard management controller (214) separate from the at least one processing element including a hardware root of trust to keep the firmware from being replaced or modified.

3. The computing device of claim 2, wherein the baseboard management controller includes cryptographic information for the stored inventory.

4. The computing device of claim 1, further including a non-volatile memory that cannot be modified outside of the firmware engine, wherein the non-volatile memory includes cryptographic information for the stored inventory.

5. The computing device of claim 1, wherein the stored inventory is in the form of a hash of the plurality of unique identifiers of a plurality of components found on the computing device when the computing device was put into the first mode.

6. The computing device of claim 5, wherein the startup inventory is in the form of a startup hash including a plurality of unique identifiers of the startup components.

7. The computing device of claim 5, wherein the hash is additionally based on a plurality of configuration settings and at least one firmware version identifier.

8. The computing device of claim 5, wherein the hash is additionally based on hardware training information about at least one of the plurality of components found on the computing device when the computing device was put into the first mode.

9. The computing device of claim 1, wherein the firmware engine is further to:
provide a notification as part of the security action that a modification has been detected and requesting a password to boot the computing device to an operating system.

10. The computing device of claim 9, wherein the password is saved as part of implementing the first mode.

11. A method comprising:
receiving (302) a password associated with a first mode of security for a device (100,200);
taking (304) an inventory of the device, the inventory based on a plurality of unique identifiers respectively associated with each main memory module installed on the device, each processor of installed on the device, a system board of the device, and each of a plurality of bus devices in a configuration space of a bus (140) of the device;
storing (306) the inventory in a non-volatile storage as a stored inventory (112);
beginning (308) execution of a boot process upon startup of the device subsequent to the device being placed in the first mode;
during the boot process, taking (310) a startup inventory of the device including a plurality of startup components, wherein the startup inventory is based on a plurality of startup unique identifiers respectively associated with each startup main memory module installed on the device, each startup processor (130)installed on the device, a startup system board (114), and each of a plurality of startup bus devices (142) in a configuration space of the bus of the device;
comparing (312) the startup inventory to the stored inventory to determine whether the startup inventory and the stored inventory match; and
performing (314) a security action in response to the comparison.

12. The method of claim 11, wherein the stored inventory and startup inventory are each in the form of a hash.

13. The method of claim 11, wherein the stored inventory includes hardware training information about at least one of the main memory modules found on the device when the device was put into the first mode.

14. The method of claim 11, further comprising:
providing a notification, as part of the security action, that a modification has been detected and requesting the password to boot the device to an operating system upon determining that the startup inventory and the stored inventory do not match.

15. A non-transitory machine-readable storage medium storing instructions that, if executed by a physical processing element of a device, cause the device to operate according to any of method claims 11 to 14.

## Patentansprüche

1. Rechenvorrichtung (100, 200), die Folgendes umfasst:
wenigstens ein Verarbeitungselement (130);
wenigstens eine Speichervorrichtung (132);
einen Bus (140), der wenigstens eine Busvorrichtung (142) beinhaltet;
eine Systemplatine (114);
eine Firmware-Maschine (110), die Firmware (220) beinhaltet, die zu Folgendem dient:
Empfangen (302) eines Passworts, das einem ersten Sicherheitsmodus für die Rechenvorrichtung zugeordnet ist;
Aufnehmen (304) eines Inventars der Rechenvorrichtung, wobei das Inventar auf mehreren eindeutigen Bezeichnern basiert, die jeweils jeder Speichervorrichtung, jedem Verarbeitungselement, der Systemplatine und jeder Busvorrichtung zugeordnet sind; und
Speichern (306) des Inventars in einem nichtflüchtigen Speicher als gespeichertes Inventar (112);
wobei die Firmware einen Bootvorgang beim Booten der Rechenvorrichtung ausführt, nachdem die Rechenvorrichtung in den ersten Modus versetzt wurde, der während des Bootvorgangs zu Folgendem dient:
Aufnehmen (310) eines Startinventars der Rechenvorrichtung, das mehrere Startkomponenten beinhaltet, wobei das Startinventar auf mehreren eindeutigen Startbezeichnern jedes Verarbeitungselements, jeder Speichervorrichtung, der Systemplatine und jeder einer Anzahl von Busvorrichtungen in einem Konfigurationsraum des Busses basiert,
Vergleichen (312) des Startinventars mit dem gespeicherten Inventar, das aufgenommen wurde, als die Rechenvorrichtung in den ersten Modus versetzt wurde, um zu bestimmen, ob das Startinventar und das gespeicherte Inventar übereinstimmen; und
Durchführen (314) einer Sicherheitsaktion als Reaktion darauf, dass das Startinventar und das gespeicherte Inventar nicht übereinstimmen.

2. Rechenvorrichtung nach Anspruch 1, die ferner Folgendes umfasst:
einen Baseboard-Management-Controller (214), der von dem wenigstens einen Verarbeitungselement getrennt ist, der einen Hardware-Vertrauensanker beinhaltet, um zu verhindern, dass die Firmware ersetzt oder modifiziert wird.

3. Rechenvorrichtung nach Anspruch 2, wobei der Baseboard-Management-Controller kryptographische Informationen für das gespeicherte Inventar beinhaltet.

4. Rechenvorrichtung nach Anspruch 1, die ferner einen nichtflüchtigen Speicher beinhaltet, der außerhalb der Firmware-Maschine nicht modifiziert werden kann, wobei der nichtflüchtige Speicher kryptographische Informationen für das gespeicherte Inventar beinhaltet.

5. Rechenvorrichtung nach Anspruch 1, wobei das gespeicherte Inventar in Form eines Hashs der mehreren eindeutigen Bezeichner mehrerer Komponenten vorliegt, die auf der Rechenvorrichtung gefunden wurden, als die Rechenvorrichtung in den ersten Modus versetzt wurde.

6. Rechenvorrichtung nach Anspruch 5, wobei das Startinventar in Form eines Starthashs vorliegt, der mehrere eindeutige Bezeichner der Startkomponenten beinhaltet.

7. Rechenvorrichtung nach Anspruch 5, wobei der Hash zusätzlich auf mehreren Konfigurationseinstellungen und wenigstens einem Firmware-Versionsbezeichner basiert.

8. Rechenvorrichtung nach Anspruch 5, wobei der Hash zusätzlich auf Hardware-Trainingsinformationen über wenigstens eine der mehreren Komponenten basiert, die auf der Rechenvorrichtung gefunden wurden, als die Rechenvorrichtung in den ersten Modus versetzt wurde.

9. Rechenvorrichtung nach Anspruch 1, wobei die Firmware-Maschine ferner zu Folgendem dient: Bereitstellen einer Benachrichtigung als Teil der Sicherheitsaktion, dass eine Modifikation erfasst wurde, und Anfordern eines Passworts, um die Rechenvorrichtung mit einem Betriebssystem zu booten.

10. Rechenvorrichtung nach Anspruch 9, wobei das Passwort als Teil eines Implementierens des ersten Modus gespeichert wird.

11. Verfahren, das Folgendes umfasst:
Empfangen (302) eines Passworts, das einem ersten Sicherheitsmodus für eine Vorrichtung (100, 200) zugeordnet ist;
Aufnehmen (304) eines Inventars der Vorrichtung, wobei das Inventar auf mehreren eindeutigen Bezeichnern basiert, die jeweils jedem Hauptspeichermodul, das auf der Vorrichtung installiert ist, jedem Prozessor, der auf der Vorrichtung installiert ist, einer Systemplatine der Vorrichtung und jeder von mehreren Busvorrichtungen in einem Konfigurationsraum eines Busses (140) der Vorrichtung zugeordnet sind;
Speichern (306) des Inventars in einem nichtflüchtigen Speicher als gespeichertes Inventar (112);
Beginnen (308) der Ausführung eines Bootvorgangs beim Start der Vorrichtung, nachdem die Vorrichtung in den ersten Modus versetzt wurde;
während des Bootvorgangs, Aufnehmen (310) eines Startinventars der Vorrichtung, das mehrere Startkomponenten beinhaltet, wobei das Startinventar auf mehreren eindeutigen Startbezeichnern basiert, die jeweils jedem Start-Hauptspeichermodul, das auf der Vorrichtung installiert ist, jedem Startprozessor (130), der auf der Vorrichtung installiert ist, einer Startsystemplatine (114) und jeder von mehreren Startbusvorrichtungen (142) in einem Konfigurationsraum des Busses der Vorrichtung zugeordnet sind;
Vergleichen (312) des Startinventars mit dem gespeicherten Inventar, um zu bestimmen, ob das Startinventar und das gespeicherte Inventar übereinstimmen; und
Durchführen (314) einer Sicherheitsaktion als Reaktion auf den Vergleich.

12. Verfahren nach Anspruch 11, wobei das gespeicherte Inventar und das Startinventar jeweils in Form eines Hashs vorliegen.

13. Verfahren nach Anspruch 11, wobei das gespeicherte Inventar Hardware-Trainingsinformationen über wenigstens eines der Hauptspeichermodule beinhaltet, die auf der Vorrichtung gefunden wurden, als die Vorrichtung in den ersten Modus versetzt wurde.

14. Verfahren nach Anspruch 11, das ferner Folgendes umfasst:
Bereitstellen einer Benachrichtigung als Teil der Sicherheitsaktion, dass eine Modifikation erfasst wurde, und Anfordern des Passworts, um die Vorrichtung mit einem Betriebssystem zu booten, nachdem bestimmt wurde, dass das Startinventar und das gespeicherte Inventar nicht übereinstimmen.

15. Nichtflüchtiges maschinenlesbares Speichermedium, das Anweisungen speichert, die, falls sie durch ein physisches Verarbeitungselement einer Vorrichtung ausgeführt werden, die Vorrichtung veranlassen, nach einem der Verfahrensansprüche 11 bis 14 zu arbeiten.

## Revendications

1. Dispositif informatique (100, 200) comprenant :
au moins un élément de traitement (130) ;
au moins un dispositif de mémoire (132) ;
un bus (140) comportant au moins un dispositif de bus (142) ;
une carte mère (114) ;
un moteur de micrologiciel (110) comportant un micrologiciel (220) pour :
recevoir (302) un mot de passe associé à un premier mode de sécurité pour le dispositif informatique ;
prendre (304) un inventaire du dispositif informatique, l'inventaire étant basé sur une pluralité d'identifiants uniques respectivement associés à chaque dispositif de mémoire, à chaque élément de traitement, à la carte mère et à chaque dispositif de bus ; et
stocker (306) l'inventaire dans un stockage non volatile en tant qu'inventaire stocké (112) ;
ledit micrologiciel étant destiné à exécuter un processus de démarrage au démarrage du dispositif informatique après le placement du dispositif informatique dans le premier mode qui, pendant le processus de démarrage, doit :
prendre (310) un inventaire de démarrage du dispositif informatique comportant une pluralité de composants de démarrage, l'inventaire de démarrage étant basé sur une pluralité d'identifiants uniques de démarrage de chaque élément de traitement, de chaque dispositif de mémoire, de la carte mère et de chacun d'un certain nombre de dispositifs de bus dans un espace de configuration du bus,
comparer (312) l'inventaire de démarrage à l'inventaire stocké pris lorsque le dispositif informatique a été mis dans le premier mode pour déterminer si l'inventaire de démarrage et l'inventaire stocké correspondent ; et
effectuer (314) une action de sécurité en réponse au fait que l'inventaire de démarrage et l'inventaire stocké ne correspondent pas.

2. Dispositif informatique selon la revendication 1, comprenant en outre :
un contrôleur de gestion de carte de base (214) séparé de l'au moins un élément de traitement comportant une racine matérielle de confiance pour empêcher le remplacement ou la modification du micrologiciel.

3. Dispositif informatique selon la revendication 2, dans lequel le contrôleur de gestion de carte de base comporte des informations cryptographiques pour l'inventaire stocké.

4. Dispositif informatique selon la revendication 1, comportant en outre une mémoire non volatile qui ne peut pas être modifiée en dehors du moteur de micrologiciel, la mémoire non volatile comportant des informations cryptographiques pour l'inventaire stocké.

5. Dispositif informatique selon la revendication 1, dans lequel l'inventaire stocké se présente sous la forme d'un hachage de la pluralité d'identifiants uniques d'une pluralité de composants trouvés sur le dispositif informatique lorsque le dispositif informatique a été mis dans le premier mode.

6. Dispositif informatique selon la revendication 5, dans lequel l'inventaire de démarrage se présente sous la forme d'un hachage de démarrage comportant une pluralité d'identifiants uniques des composants de démarrage.

7. Dispositif informatique selon la revendication 5, dans lequel le hachage est en outre basé sur une pluralité de paramètres de configuration et au moins un identifiant de version de micrologiciel.

8. Dispositif informatique selon la revendication 5, dans lequel le hachage est en outre basé sur des informations d'apprentissage matériel concernant au moins l'un de la pluralité de composants trouvés sur le dispositif informatique lorsque le dispositif informatique a été mis dans le premier mode.

9. Dispositif informatique selon la revendication 1, dans lequel le moteur de micrologiciel doit en outre : fournir une notification, dans le cadre de l'action de sécurité, qu'une modification a été détectée et demander un mot de passe pour démarrer le dispositif informatique sur un système d'exploitation.

10. Dispositif informatique selon la revendication 9, dans lequel le mot de passe est sauvegardé dans le cadre de la mise en oeuvre du premier mode.

11. Procédé comprenant :
la réception (302) d'un mot de passe associé à un premier mode de sécurité pour un dispositif (100, 200) ;
la prise (304) d'un inventaire du dispositif, l'inventaire étant basé sur une pluralité d'identifiants uniques respectivement associés à chaque module de mémoire principale installé sur le dispositif, à chaque processeur étant installé sur le dispositif, à une carte mère du dispositif, et à chacun d'une pluralité de dispositifs de bus dans un espace de configuration d'un bus (140) du dispositif ;
le stockage (306) de l'inventaire dans un stockage non volatile en tant qu'inventaire stocké (112) ;
le début (308) de l'exécution d'un processus de démarrage lors du démarrage du dispositif après le placement du dispositif dans le premier mode ;
pendant le processus de démarrage, la prise (310) d'un inventaire de démarrage du dispositif comportant une pluralité de composants de démarrage, l'inventaire de démarrage étant basé sur une pluralité d'identifiants uniques de démarrage respectivement associés à chaque module de mémoire principale de démarrage installé sur le dispositif, à chaque processeur de démarrage (130) installé sur le dispositif, à une carte mère de démarrage (114) et à chacun d'une pluralité de dispositifs de bus de démarrage (142) dans un espace de configuration du bus du dispositif ;
la comparaison (312) de l'inventaire de démarrage avec l'inventaire stocké pour déterminer si l'inventaire de démarrage et l'inventaire stocké correspondent ; et
l'exécution (314) d'une action de sécurité en réponse à la comparaison.

12. Procédé selon la revendication 11, dans lequel l'inventaire stocké et l'inventaire de démarrage se présentent chacun sous la forme d'un hachage.

13. Procédé selon la revendication 11, dans lequel l'inventaire stocké comporte des informations d'apprentissage matériel concernant au moins l'un des modules de mémoire principaux trouvés sur le dispositif lorsque le dispositif a été mis dans le premier mode.

14. Procédé selon la revendication 11, comprenant en outre :
la fourniture d'une notification, dans le cadre de l'action de sécurité, qu'une modification a été détectée et la demande du mot de passe pour démarrer le dispositif sur un système d'exploitation lors de la détermination que l'inventaire de démarrage et l'inventaire stocké ne correspondent pas.

15. Support de stockage non transitoire lisible par machine stockant des instructions qui, si elles sont exécutées par un élément de traitement physique d'un dispositif, amènent le dispositif à fonctionner selon l'une quelconque des revendications des procédés 11 à 14.
